# EUROPEAN PATENT SPECIFICATION

(11) **EP 2 056 581 B1**
(45) Date of publication and mention of the grant of the patent: **20.06.2012**
(21) Application number: 08164994.9
(22) Date of filing: 24.09.2008
(51) Int. Cl.: H04N 1/03, H04N 1/193

(54) **Image reading device and document reading device**
Bildlesevorrichtung und Dokumentlesevorrichtung
Dispositif de lecture d'images et dispositif de lecture de documents

(30) Priority: 30.10.2007 JP 2007281540
(43) Date of publication of application: 06.05.2009
(73) Proprietor: Ricoh Company, Ltd., Tokyo 143-8555 (JP)
(72) Inventor: Satoh, Nobuyuki, Kanagawa (JP)
(74) Representative: Schwabe - Sandmair - Marx

(56) References cited:
- EP-A- 0 284 043
- EP-A- 0 849 932
- US-A- 4 337 394
- US-B1- 6 671 421

## Description

### BACKGROUND OF THE INVENTION

### 1. Field of the Invention

The present invention relates to an image reading device that includes line image sensors arranged to have reading areas that partially overlap each other and is configured to read entire image data of an image by connecting image data pieces of an overlapping portion read by the line image sensors; and a document reading device including the image reading device.

### 2. Description of the Related Art

When a typical image reading device reads a document at a resolution of 600 dpi using a single image sensor (CCD), since an A0-size document normally has a document image width of about 840 mm, the image sensor needs to have about 20,000 pixels, which increases the cost.

Due to limitations on the number of pixels of line image sensors, many document reading devices for A0-size or A1 size documents that have been used include plural line image sensors of typically A3 size arranged in a main scanning direction to have reading areas partially overlap each other and is configured to read image data by connecting data pieces read by the line image sensors to each other (see Japanese Patent Laid-Open Publication No. 62-101170 (Patent Document 1) and Japanese Patent Laid-Open Publication No. 56-126373 (Patent Document 2)).

However, even if connection points of the line image sensors of such a document reading device in the overlapping portion are precisely adjusted at the time of manufacturing, the connection points are shifted due to vibration during transportation and deformation of the device body at the time of installation. If the document reading device reads an image in such a condition, an offset may occur in a resulting image due to the shifted connection points.

Image reading optical systems normally require conjugation length in the range of about 500 mm - 800 mm and have a reduction ratio of about 1/15. Accordingly, a positional shift of 10 µm at the line image sensor side creates a positional shift as great as 150 µm on the document surface. That is, thermal expansion due to a temperature change in the device can cause a shift. This shift occurs in both the main scanning direction and the sub scanning direction.

To overcome this problem, Japanese Patent Laid-Open Publication No. 2000-358140 (Patent Document 3) discloses an image reading device in which a marker is formed by an LED in overlapping reading areas of line image sensors. Each entire optical system is mechanically moved in the sub scanning direction to detect a relative position of the optical system. Then, the sub scanning position is adjusted to minimize the positional shift.

Japanese Patent Laid-Open Publication No. 2006-25289 (Patent Document 4) corresponding to US-B1-6 671 421 discloses an image reading device according to the preamble of claim 1 that detects a positional shift in the main scanning direction using a correction projection line extending in the sub scanning direction, detects a positional shift in the sub scanning direction using two projection lines not parallel to the correction projection line, and adjusts the line synchronization of a CCD drive clock to connect image data pieces.

The device disclosed in Patent Document 3, however, needs to mechanically move each entire optical system and therefore requires a guide rod or a cam for guiding a each optical system, which increases the cost. Further, the device of Patent Document 3 has poor durability.

Even if connection positions of the line image sensors can be aligned with each other, a defect of the guide rod may affect the parallelism of the optical systems when they are moved. Moreover, in order to detect a positional shift, each entire optical system needs to be reciprocally moved to detect peak positions of the line image sensors, and therefore adjustment takes time, resulting in an increased waiting time.

According to the device disclosed in Patent Document 4, the peripheral widths of the two non-parallel lines are measured and then the shift amount in the sub scanning direction is calculated based on the difference. Therefore, if optical systems have a magnification error in an overlapping portion, the magnification error causes an error in position measurement.

Moreover, because the 50% point of the peak is used as the median in detection of the center position of a projection pattern, if the projection pattern is not uniformly illuminated, it is not possible to find the correct center position. Furthermore, because the edges of the projection pattern are not interpolated upon calculation of the position, the detection accuracy is as low as one dot unit (see FIGS. 7 and 8 of Patent Document 4).

A change in the thermal environment causes a slight positional shift of the projection position of the correction pattern. Therefore, even if the relative positions in the overlapping portion can be aligned, the absolute positions of the sensors are shifted due to the shift of the projection position of the correction pattern.

### SUMMARY OF THE INVENTION

In view of the foregoing, the present invention is directed toward providing an image reading device and a document reading device that is
(1) capable of performing alignment of low-cost, high-durability, and high-accuracy optical systems without moving the entire optical systems;
(2) capable of performing adjustment of alignment in a short time without reciprocally moving the entire optical systems;
(3) capable of performing alignment with high accuracy even if the optical systems have a magnification error;
(4) capable of performing alignment with high accuracy by improving the accuracy in positional shift measurement; and
(5) includes a connection optical system capable of performing alignment of an absolute position of a projection pattern with high accuracy even if the absolute position is shifted due to thermal deformation.

In an embodiment of the present invention, there is provided an image reading device according to claim 1 and in another embodiment of the present invention, there is provided a document reading device according to claim 10.

According to the above-described image reading device, positional shifts of reading positions in the overlapping portion can be detected by moving the light spot as the projection pattern. Therefore, unlike the related-art devices, there is no need to move the entire optical systems in order to detect positional shifts, which allows an increase in the durability and a reduction in the cost of the image reading optical systems used for image data connection. Furthermore, control based on detection of positional shifts in the overlapping portion enables connection of the image data pieces with high accuracy and improves the reliability of the image reading device.

According to the above-described document reading device, even if a document reading unit is an optical system that includes plural line image sensors, the optical system has an increased durability and is capable of accurately connecting image data pieces, which improves the reliability and the document image reading performance of the document reading device.

### BRIEF DESCRIPTION OF THE DRAWINGS

FIG. 1 is a schematic diagram illustrating a basic configuration of a document reading device according to the prior art.
FIG. 2 is a configuration diagram illustrating an optical system of a document reading device of a first embodiment of the present invention that detects a positional shift of a reading position in an overlapping portion;
FIG. 3 is a block diagram illustrating a control system of the document reading device of the first embodiment of the present invention;
FIG. 4 is a diagram illustrating image data pieces that are read by line image sensors while a light spot is moved;
FIG. 5 is a configuration diagram illustrating a modified example of the first embodiment;
FIG. 6 is a configuration diagram illustrating an optical system of a document reading device of a second embodiment of the present invention that detects a positional shift of a reading position in an overlapping portion; and
FIG. 7 is a configuration diagram illustrating an optical system of a document reading device of a third embodiment of the present invention that detects a positional shift of a reading position in an overlapping portion.

### DETAILED DESCRIPTION OF THE PREFERRED EMBODIMENT

Exemplary embodiments of the present invention are described below with reference to the accompanying drawings.

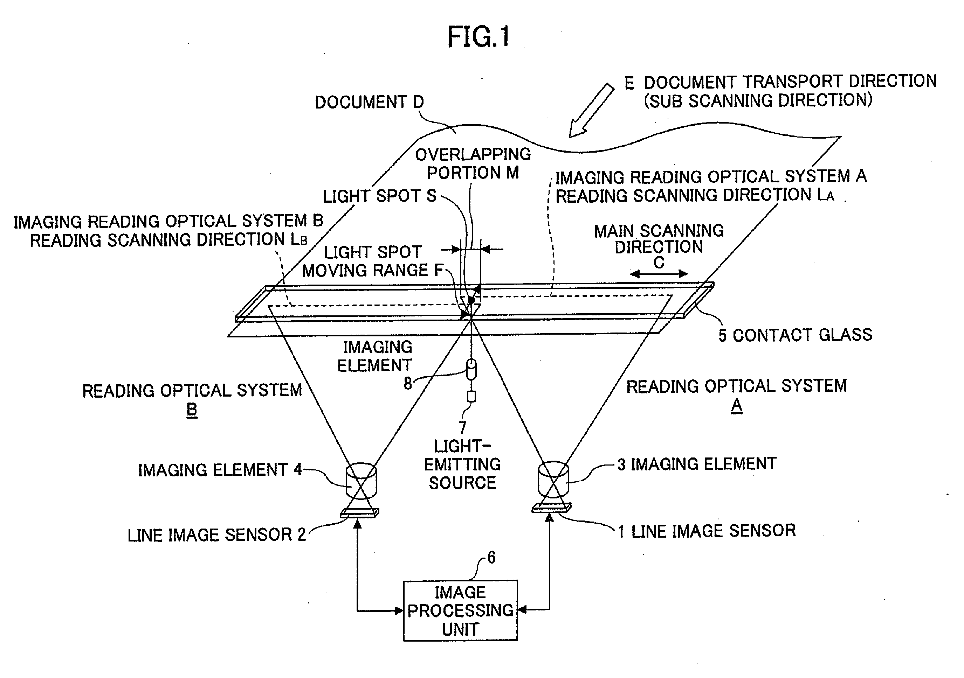

FIG. 1 is a schematic diagram illustrating a basic configuration of a document reading device as known from the prior art. Although two reading optical systems A and B are arranged in series in this embodiment, three or more reading optical systems may be provided that are arranged in series. The reading optical systems A and B are CCDs as photoelectric conversion elements and include line image sensors 1 and 2 arranged to have reading scanning lines that partially overlap each other and imaging elements 3 and 4 such as imaging lenses, respectively.

In FIG. 1, a document D to be read is transported on a contact glass 5 by a transporting unit (not shown) in the direction (a sub scanning direction) of the arrow E. The contact glass 5 is substantially uniformly illuminated by a read illumination light source (not shown). A light illuminates a document image of the document D and then is reflected. In the reading optical systems A and B, the reflected light is focused onto light receiving surfaces of the line image sensors 1 and 2 by the imaging elements 3 and 4 and is read by the line image sensors 1 and 2 as image data pieces.

As shown in FIG. 1, reading scanning lines L_{A} and L_{B} of the reading optical systems A and B on the contact glass 5 are formed to have an overlapping portion M at the substantial center of the document D in a main scanning direction C. The image data pieces of the overlapping portion M read by the line image sensors 1 and 2 are processed and connected to each other by an image processing unit 6, so that entire image data are read.

The line image sensors 1 and 2 are adjusted to ensure no positional shift in the sub scanning direction at the time of manufacturing. This shift adjustment in the sub scanning direction is performed at the same time when the position and angle of the imaging elements 3 and 4 and the position and angle of the line image sensors 1 and 2 are adjusted by an actuator (not shown) to maintain the MTF (Modulation Transfer Function), the magnification, an registration error, etc., within standards.

As mentioned above, the conjugation length of the reading optical systems A and B is about 600 mm. Therefore, if the line image sensors 1 and 2 and the imaging elements 3 and 4 are slightly displaced, the reading positions of the reading scanning lines LA and LB on the contact glass are easily shifted by 1 dot or greater, resulting in reduced quality of a read image. In particular, vibration during transportation of the device and a thermal expansion due to a temperature change in the device tend to cause a positional shift.

In this embodiment, in order to detect positional shifts of the reading positions of the line image sensors 1 and 2 in the overlapping portion, a light emitted from a light-emitting source 7 that can be turned on and off and is formed of a light-emitting diode (LED) or a laser diode (LD) is focused as a light spot S onto the overlapping portion M of the reading optical systems A and B via an imaging element 8.

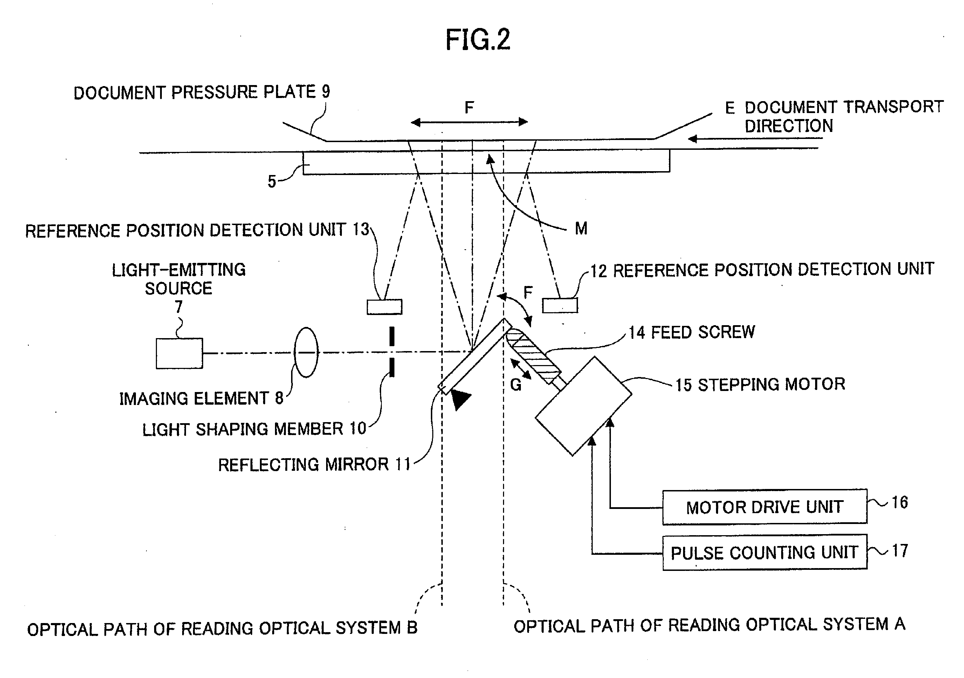

FIG. 2 is a configuration diagram illustrating an optical system of a document reading device of a first embodiment of the present invention that detects a positional shift of a reading position in an overlapping portion.

Referring to FIG. 2, reference numeral 9 denotes a document pressure plate to press a document D against a contact glass 5; 10 denotes a light shaping member having a small hole that shapes beams of light emitted from a light-emitting source 7 into an arbitrary correct shape; 11 denotes a reflecting mirror which forms a light spot moving unit that deflects the light focused by an imaging element 8 to move a light spot S in an overlapping portion; and 12 and 13 denotes reference position detection units each including a light-receiving element that receives a reflected light from the light spot S to detect a position (absolute position) of the light spot S in an overlapping portion M.

Further, reference numeral 14 denotes a feed screw as an actuator that rotates the reflecting mirror 11; 15 denotes a stepping motor that drives the feed screw 14; 16 denotes a motor drive unit of the stepping motor 15; and 17 denotes a pulse counting unit that counts the number of drive pulses of the stepping motor 15.

The light-emitting source 7 is arranged to have a conjugate relationship with a substantial document passage position on the contact glass 5. An optical image of a light-emitting point of the light-emitting source 7 is projected as the light spot (imaging light) S. The light spot S can be reciprocally moved in the direction of the arrow F of FIGS. 1 and 2 by displacing the light-emitting source 7, the imaging element 8, or a turn-around mirror (not shown) on the optical path. The reciprocal moving distance is greater than maximum amount of a positional shift in the overlapping portion M. The positional shift amount varies depending on the magnitude of thermal deformation, vibration, etc.

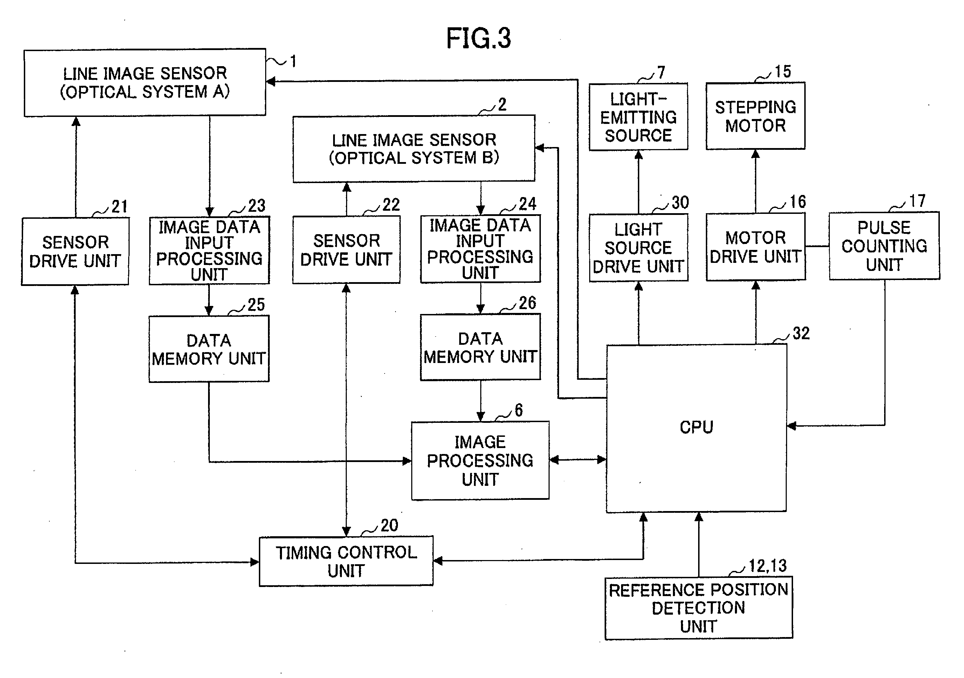

FIG. 3 is a block diagram illustrating a control system of the document reading device of the first embodiment of the present invention. Reference numeral 20 denotes a timing control unit that adjusts read timing of the line image sensors 1 and 2 and performs drive control of the line image sensors 1 and 2 via sensor drive units 21 and 22, respectively; 23 and 24 denote image data input processing units that convert image data pieces output from the line image sensors 1 and 2 into digital signals, respectively; and 25 and 26 denote data memory units.

Further, 30 denotes a light source drive unit that turns on and off the light-emitting source 7; 16 denotes a motor drive unit that drives the stepping motor 15 as the drive source of the reflecting mirror 11 of the light spot moving unit; and 32 denotes a CPU (central processing unit) that receives detection measurement data pieces from components of the control system and controls the components.

Next, operations of a positional shift detection unit are described according to the first embodiment. The image processing unit 6 and the CPU 32 perform control/arithmetic processing of the components described below.

A light is emitted from the light-emitting source 7, passes through the imaging element 8, is reflected by the rotatable reflecting mirror 11, and is focused near the image surface of the document D. More specifically, the light is focused onto the document pressure plate 9. The feed screw 14 is linearly moved in the direction of the arrow G by rotation of the stepping motor 15, so that the reflecting mirror 11 is rotated. Thus the light spot S is moved in the sub scanning direction (direction of the arrow F) on the document pressure plate 9. The displacement angle of the reflecting mirror 11 can be calculated based on the number of drive pulses based on a one-to-one relationship, and therefore the moving distance (the amount of displacement) of the reflected light of the light spot S can be detected based on the count of the pulse counting unit 17.

In place of the stepping motor 15 as the drive motor that drives the reflecting mirror 11, an encoder may be provided that is attached to a motor rotary shaft. The moving distance of the light spot S can be correctly measured by counting the number of pulses of the encoder.

The absolute reference position of the light spot S can be detected by detecting the reflected light of the light spot S on the lower surface of the contact glass 5 using reference position detection units 12 and 13 disposed under the contact glass 5.

The positions of the light spot S whose reflected light from the lower surface of the contact glass 5 are made incident on the reference position detection units 12 and 13, respectively, are determined as reference positions. The absolute position of the light spot S can be determined based on the number of pulses input to the stepping motor 15 from the reference position.

If one of the reference position detection units 12 and 13 is disposed at the end side of the moving range (the moving direction F) of the light spot S and the number of drive pulses from a movement start position to a movement end position of the light spot is counted, it is possible to accurately determine the moving distance of the light spot S per pulse and thereby to perform movement control with higher accuracy.

In this embodiment, if the optical paths of the reading optical system A and B are misaligned as shown by the dotted lines in FIG. 2, the reading positions are shifted (the positional shifts are exaggerated in FIG. 2 to facilitate illustration. The actual positional shift is less than about 0.5 mm).

A positional shift detection is described below in detail. First, when the document D is not placed, the light-emitting source 7 is turned on such that the light emitted from the light-emitting source is focused as a light spot S onto the document pressure plate 9. Next, the stepping motor 15 is activated to rotate the reflecting mirror 11, thereby moving the light spot S. The light spot S is moved until the reflected light of the light spot S becomes incident on the reference position detection unit 12 disposed at the start side of the moving range. When the reflected light becomes incident on the reference position detection unit 12, the count of the pulse counting unit 17 is reset. Then, the reflecting mirror 11 is rotated to move the light spot S in the opposite direction. The pulse counting unit 17 counts the number of pulses while the light spot S is moved in the opposite direction, and stores the count when the reflected light becomes incident on the reference position detection unit 13 disposed at the end side. When the distance between the reference position detection units 12 and 13 is L and the pulse count is C, the moving distance per pulse is L/C.

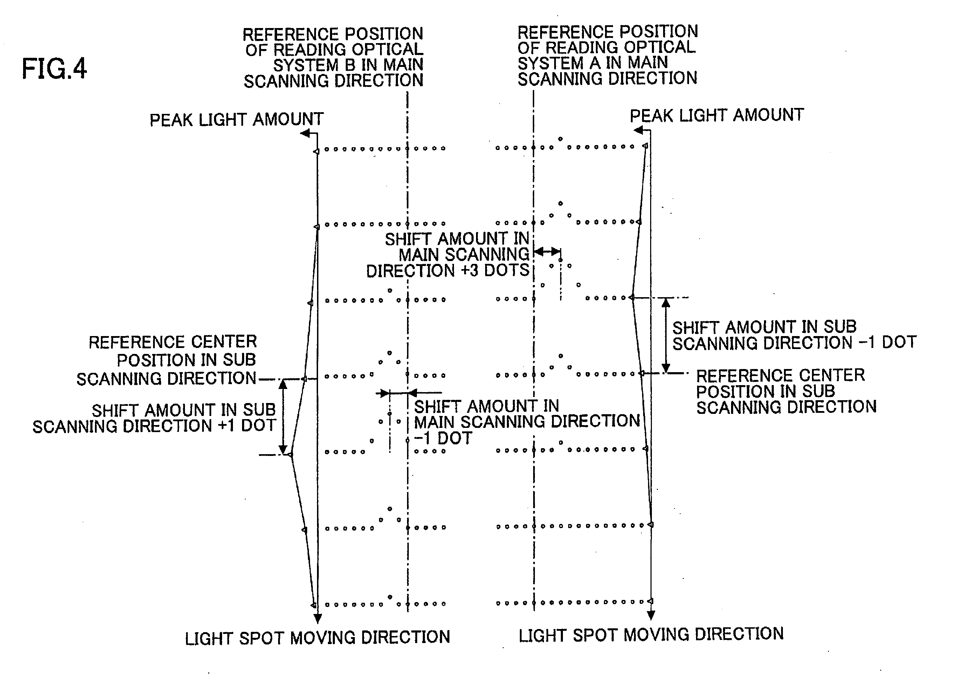

While the light spot S is moved in the opposite direction and the number of input pulse is counted, the reading optical systems A and B obtain image data pieces. FIG. 4 illustrates conditions of the read image data pieces.

The right-hand side of FIG. 4 shows the image data piece in the overlapping portion obtained by the line image sensor 1 of the reading optical system A, and the left-hand side of FIG. 4 shows the image data pieces in the overlapping portion obtained by the line image sensor 2 of the reading optical system B. The image data pieces are shown separated for illustrative purposes. As the light spot S moves, the conditions of the image data pieces changes those shown at the top stage to those shown at the bottom stage.

When the light spot S is moved from the right reference position to the left side in FIG. 2, the light spot S first moves across the reading scanning line L_{A} of the reading optical system A. Thus, an output of the light spot S shown at the top right stage of FIG. 4 is obtained. When the light spot S is further moved, the maximum value of the output reaches a peak in the position of the third stage from the top. When the light spot S is further moved, the peak value decreases. On the other hand, in the case of the reading optical system B, the maximum value of the output reaches a peak when the light spot S in the position of the fifth stage from the top, and then the peak value decreases.

That is, the output of the light spot S reaches a peak when the light spot S reaches the center position of each of the reading scanning lines L_{A} and L_{B}. Therefore, the peak positions of the reading optical systems A and the reading optically systems B are detected so that the relative positional shift in the sub scanning direction can be detected based on the difference between the center positions.

Further, since the correct center position can be determined based on the count (half the number of counted pulses) of the pulse counting unit 17, the absolute shift amount (from the center position of the layout) can be detected.

In the example of FIG. 4, the reading optical system A shows a positional shift of -1 dot, and the reading optical system B shows a positional shift of +1 dot.

In this example, the positional shifts in the sub scanning direction are measured in terms of integral numbers of dots. However, if the moving distance is controlled in terms of less than 1 dot, the positional shifts can be measured in terms of less than 1 dot.

A positional shift in the main scanning direction can be detected based on an ideal address (the reference position of the reading optical system in the main scanning direction and the position in the main scanning direction where the image data shows a peak). In this example, the reading optical system A shows a positional shift of +3 dots, and the reading optical system B shows a positional shift of -1 dot. In this example, the positional shifts in the main scanning direction are measured in terms of integral numbers of dots. However, the positional shifts can be measured in terms of less than 1 dot using linear interpolation or spline interpolation.

It is to be noted that the image processing unit 6 and the CPU 32 perform various operations such as arithmetic processing and control operations on the image data pieces. Upon reading the document D, the image processing unit 6 performs data processing such as connecting image data pieces of the overlapping portion based on image data pieces stored in the data memory units 25 and 26 to create and output entire image data.

The image processing unit 6 and the CPU 32 offers an arithmetic processing function of the positional shift detection unit; arithmetic processing functions of a position detection unit, a displacement detection unit, and a displacement amount detection unit to be performed based on data items received from the reference position detection units 12 and 13, the pulse counting unit 17, etc.; and arithmetic processing functions of a shift correction unit and an image interpolation unit. In an alternative embodiment, these units may be provided independently from the image processing unit 6 and the CPU 32.

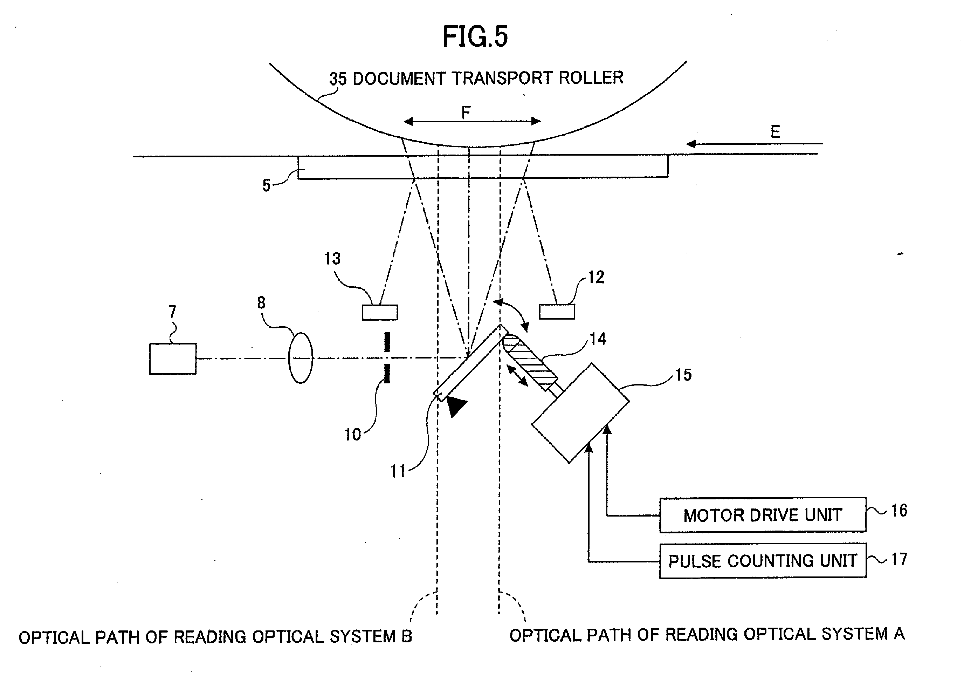

FIG. 5 is a configuration diagram illustrating a modified example of the first embodiment. In this modified example, in place of the document pressure plate 9 of the first embodiment that presses the document D against the contact glass 5, a document transport roller 35 is used that presses the document D against the contact glass 5.

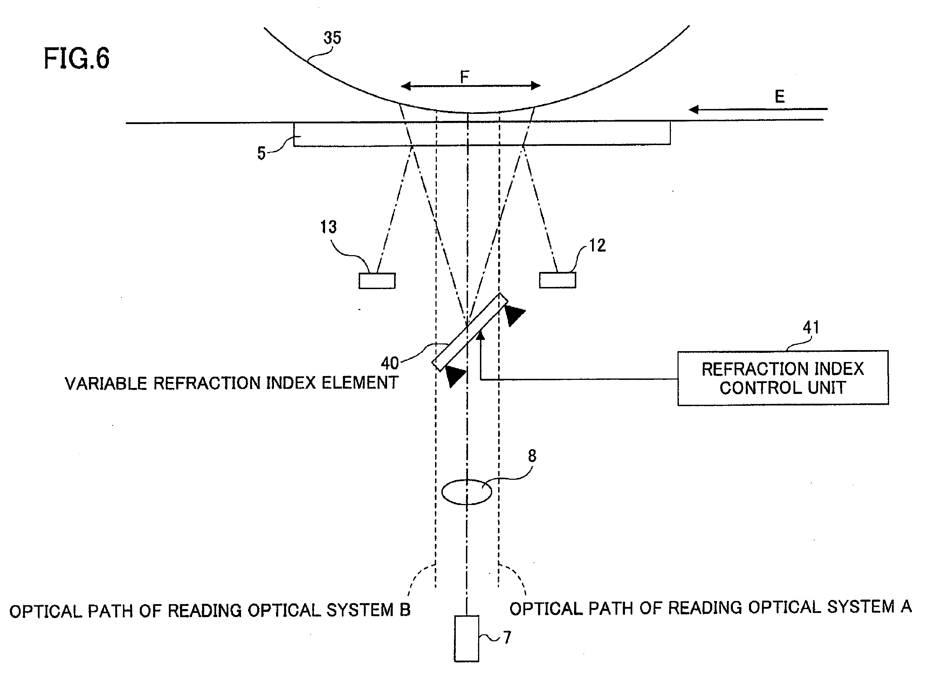

FIG. 6 is a configuration diagram illustrating an optical system of a document reading device of a second embodiment of the present invention that detects a positional shift of a reading position in an overlapping portion. In the second embodiment, in place of the reflecting mirror 11 of the first embodiment, a variable refraction index element 40 whose refraction index can electrically be controlled and a refraction index control unit 41 that controls the refraction index of the variable refraction index element 40 are provided as a light spot moving unit that moves the light spot S. The light-emitting source 7 such as a LD that can be turned on and off and the imaging element 8 such as a lens are disposed under the variable refraction index element 40 in the direction perpendicular to the surface of the contact glass 5.

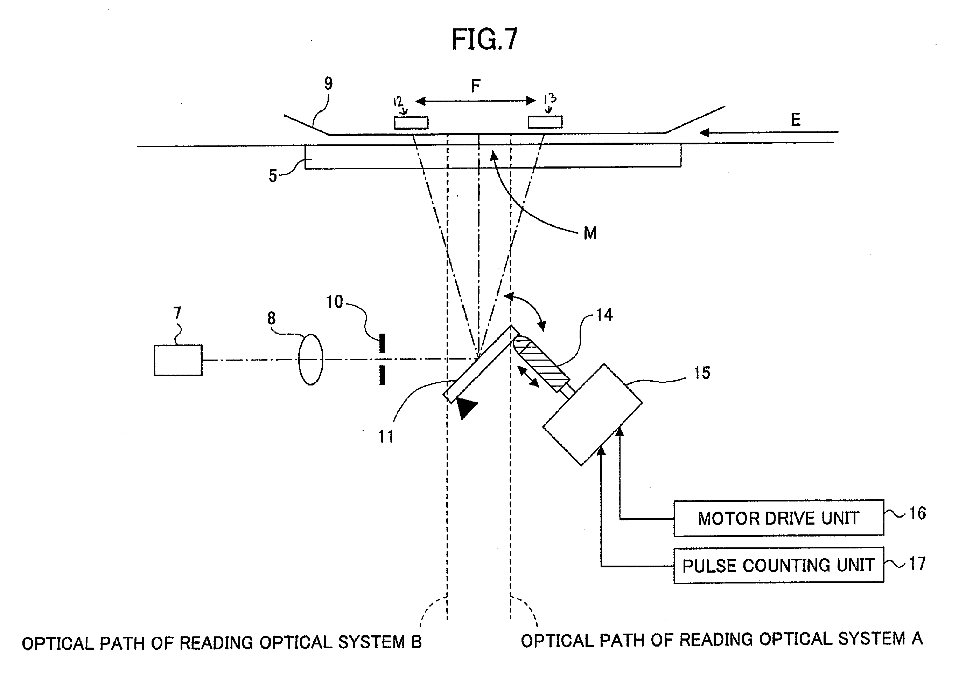

FIG. 7 is a configuration diagram illustrating an optical system of a document reading device of a third embodiment of the present invention that detects a positional shift of a reading position in an overlapping portion. In the first embodiment, the reference position detection units 12 and 13 are disposed near the overlapping portion M, are spaced apart from each other in the sub scanning direction, and are arranged to receive reflected lights from the contact glass 5. In the third embodiment, a semitransparent document pressure plate 9 is used and therefore the reference position detection units 12 and 13 can receive lights that have passed through the contact glass 5 at the upper side of the document pressure plate 9. The reference positions are detected in the same manner as in the first embodiment.

The present invention is applicable to document reading devices that illuminate a document in image forming apparatuses such as copiers, facsimile machines, and scanners and is preferably embodied as an image reading device that reads various images.

## Claims

1. An image reading device comprising line image sensors (1, 2) arranged to have reading areas that partially overlap each other and is configured to read entire image data of an image by connecting image data pieces of an overlapping portion (M) of the reading areas read by the line image sensors;
an optical unit configured to focus a light emitted from a light source (7), which can be turned on and off, onto the overlapping portion of the reading areas of the line image sensors (1, 2) in the image to form a light spot (S);
the image reading device **characterized by** further comprising:
a light spot moving unit (11) configured to deflect the light emitted from the light source (7) to move the light spot formed in the image; and
a positional shift detection unit (6, 32) configured to detect displacements of reading positions of the line image sensors in the overlapping portion based on the image data pieces of the overlapping portion that are read by the line image sensors (1, 2) while the light spot moving unit (11) moves the light spot.

2. The image reading device as claimed in claim 1, further comprising:
a light shaping member (10) configured to shape beams of the light emitted from the light source (7) into an arbitrary shape.

3. The image reading device as claimed in claim 1, further comprising:
a position detection unit (12, 13) configured to detect a displacement of the light spot.

4. The image reading device as claimed in claim 1 or 3, further comprising:
a moving distance detection unit (17, 32) configured to detect a displacement amount of the light spot (S).

5. The image reading device as claimed in claim 3 or 4, further comprising:
a calculating unit (32) configured to calculate an amount that the light spot moving unit (11) is driven to detect the displacement or the displacement amount of the light spot (S).

6. The image reading device as claimed in claim 1 or 5, wherein the light spot moving unit (11) includes a reflecting mirror.

7. The image reading device as claimed in any one of claims 1, 5 and 6, further comprising:
a relative position detection unit (12, 13) configured to detect relative positions of optical systems in a main scanning direction (C) and a sub scanning direction (E), the optical systems being configured to read the light spot (S) using the line image sensors (1, 2) at the same time while the light spot is moved by the light spot moving unit (11) and focus reflected light onto the corresponding line image sensors (1, 2).

8. The image reading device as claimed in claim 7, further comprising:
a connection point determining unit configured to determine connecting points of the image data pieces in terms of dots based on the detected relative positions.

9. The image reading device as claimed in claim 7 or 8, further comprising:
a shift correction unit configured to correct a relative shift of less than one dot based on the detected relative positions using image interpolation.

10. A document reading device configured to optically read image information of a document, the document reading device comprising:
one of the image reading devices of claims 1 through 9.

## Patentansprüche

1. Bildlesevorrichtung, welche Zeilenbildsensoren (1, 2) umfasst, welche so angeordnet sind, um Lesebereiche aufzuweisen, die einander teilweise überlappen, und welcher konfiguriert ist, um die gesamten Bilddaten eines Bildes zu lesen, indem Bilddatenteile eines überlappenden Abschnitts (M) der Lesebereiche verbunden werden, welche durch die Zeilenbildsensoren gelesen werden:
eine optische Einheit, konfiguriert, um ein Licht zu fokussieren, welches von einer Lichtquelle (7), welche an- und ausgeschaltet werden kann, auf den überlappenden Abschnitt der Lesebereiche der Zeilenbildsensoren (1, 2) in dem Bild emittiert wird, um einen Lichtpunkt (S) auszubilden;
wobei die Bildlesevorrichtung **dadurch gekennzeichnet ist, dass** sie weiter Folgendes umfasst:
eine Bildpunktbewegungseinheit (11), konfiguriert, um das Licht abzulenken, welches von der Lichtquelle (7) emittiert wird, um den Lichtpunkt zu bewegen, welcher in dem Bild ausgebildet wird; und
eine Positionsverschiebungs-Detektionseinheit (6, 32), konfiguriert, um Abstände von Lesepositionen der Zeilenbildsensoren in dem überlappenden Abschnitt basierend auf den Bilddatenteilen des überlappenden Abschnitts zu detektieren, die durch die Zeilenbildsensoren (1, 2) gelesen werden, während die Lichtpunktbewegungseinheit (11) den Lichtpunkt bewegt.

2. Bildlesevorrichtung nach Anspruch 1, welche weiter Folgendes umfasst:
ein Lichtformgebungsglied (10), konfiguriert, um Strahlen des Lichts, welches von der Lichtquelle (7) emittiert wird, in eine beliebige Form zu formen.

3. Bildlesevorrichtung nach Anspruch 1, welche weiter Folgendes umfasst:
eine Positionsdetektionseinheit (12, 13), konfiguriert, um einen Abstand des Lichtpunkts zu detektieren.

4. Bildlesevorrichtung nach Anspruch 1 oder 3, welche weiter Folgendes umfasst:
eine Bewegungsabstands-Detektionseinheit (17, 32), konfiguriert, um eine Abstandshöhe des Lichtpunkts (S) zu detektieren.

5. Bildlesevorrichtung nach Anspruch 3 oder 4, welche weiter Folgendes umfasst:
eine Berechnungseinheit (32), konfiguriert, um eine Höhe zu berechnen, um die die Lichtpunktbewegungseinheit (11) angetrieben wird, um den Abstand bzw. die Abstandshöhe des Lichtpunkts (S) zu detektieren.

6. Bildlesevorrichtung nach Anspruch 1 oder 5, wobei die Lichtpunktbewegungseinheit (11) einen Reflektorspiegel umfasst.

7. Bildlesevorrichtung nach irgendeinem der Ansprüche 1, 5 und 6, welche weiter Folgendes umfasst:
eine Relativposition-Detektionseinheit (12, 13), konfiguriert, um Relativpositionen von optischen Systemen in einer Hauptabtastrichtung (C) und einer Unterabtastrichtung (E) zu detektieren, wobei die optischen Systeme konfiguriert sind, um den Lichtpunkt (S) zu lesen, wobei die Zeilenbildsensoren (1, 2) zur selben Zeit verwendet werden, während der Lichtpunkt durch die Lichtpunktbewegungseinheit (11) bewegt wird und reflektiertes Licht auf die entsprechenden Zeilenbildsensoren (1, 2) fokussiert.

8. Bildlesevorrichtung nach Anspruch 7, welche weiter Folgendes umfasst:
eine Verbindungspunkt-Bestimmungseinheit, konfiguriert, um Verbindungspunkte der Bilddatenteile in Form von Punkten basierend auf den detektierten Relativpositionen zu bestimmen.

9. Bildlesevorrichtung nach Anspruch 7 oder 8, welche weiter Folgendes umfasst:
eine Verschiebungskorrektureinheit, konfiguriert, um eine relative Verschiebung von weniger als einem Punkt basierend auf den detektierten Relativpositionen zu korrigieren, wobei Bildinterpolation verwendet wird.

10. Dokumentlesevorrichtung, konfiguriert, um optisch Bildinformationen eines Dokuments zu lesen, wobei die Dokumentlesevorrichtung Folgendes umfasst:
eine der Bildlesevorrichtungen nach Anspruch 1 bis einschließlich 9.

## Revendications

1. Dispositif de lecture d'image comprenant des capteurs d'image de ligne (1, 2) agencés pour avoir des zones de lecture qui se superposent partiellement et qui est configuré pour lire les données d'image entière d'une image en reliant les éléments de données d'image d'une partie de superposition (M) des zones de lecture lues par les capteurs d'image de ligne ;
une unité optique configurée pour focaliser une lumière émise par une source de lumière (7), qui peut être activée et désactivée, sur la partie de superposition des zones de lecture des capteurs d'image de ligne (1, 2) dans l'image pour former un point de lumière (S) ;
le dispositif de lecture d'image étant **caractérisé en ce qu'**il comprend en outre :
une unité de déplacement de point de lumière (11) configurée pour défléchir la lumière émise par la source de lumière (7) afin de déplacer le point de lumière formé dans l'image ; et
une unité de détection de décalage de position (6, 32) configurée pour détecter les déplacements des positions de lecture des capteurs d'image de ligne dans la partie de superposition sur la base des éléments de données d'image de la partie de superposition qui sont lus par les capteurs d'image de ligne (1, 2) tandis que l'unité de déplacement de point de lumière (11) déplace le point de lumière.

2. Dispositif de lecture d'image selon la revendication 1, comprenant en outre :
un élément de mise en forme de lumière (10) configuré pour mettre les faisceaux de la lumière émise par la source de lumière (7) en une forme arbitraire.

3. Dispositif de lecture d'image selon la revendication 1, comprenant en outre :
une unité de détection de position (12, 13) configurée pour détecter un déplacement du point de lumière.

4. Dispositif de lecture d'image selon la revendication 1 ou 3, comprenant en outre :
une unité de détection de distance de déplacement (17, 32) configurée pour détecter une quantité de déplacement du point de lumière (S).

5. Dispositif de lecture d'image selon la revendication 3 ou 4, comprenant en outre :
une unité de calcul (32) configurée pour calculer une quantité d'entraînement de l'unité de déplacement de point de lumière (11) pour détecter le déplacement ou la quantité de déplacement du point de lumière (S).

6. Dispositif de lecture d'image selon la revendication 1 ou 5, dans lequel l'unité de déplacement de point de lumière (11) comprend un miroir réfléchissant.

7. Dispositif de lecture d'image selon l'une quelconque des revendications 1, 5 et 6, comprenant en outre :
une unité de détection de positions relatives (12, 13) configurée pour détecter les positions relatives de systèmes optiques dans une direction de balayage principal (C) et une direction de balayage secondaire (E), les systèmes optiques étant configurés pour lire le point de lumière (S) en utilisant les capteurs d'image de ligne (1, 2) simultanément au déplacement du point de lumière par l'unité de déplacement de point de lumière (11) et pour focaliser la lumière réfléchie sur les capteurs d'image de ligne (1, 2) correspondants.

8. Dispositif de lecture d'image selon la revendication 7, comprenant en outre :
une unité de détermination de point de liaison configurée pour déterminer les points de liaison des éléments de données d'image en termes de points sur la base des positions relatives détectées.

9. Dispositif de lecture d'image selon la revendication 7 ou 8, comprenant en outre :
une unité de correction de décalage configurée pour corriger un décalage relatif de moins d'un point sur la base des positions relatives détectées en utilisant une interpolation d'image.

10. Dispositif de lecture de document configuré pour lire optiquement les informations d'image d'un document, le dispositif de lecture de document comprenant :
l'un des dispositifs de lecture d'image des revendications 1 à 9.
